# EUROPEAN PATENT SPECIFICATION

(11) **EP 3 082 353 B1**
(45) Date of publication and mention of the grant of the patent: **01.07.2020**
(21) Application number: 14878136.2
(22) Date of filing: 09.01.2014
(51) Int. Cl.: H04W 8/20, H04W 88/02

(54) **METHOD AND TERMINAL DEVICE FOR SENDING AND RECEIVING USER DATA**
VERFAHREN UND ENDGERÄTEVORRICHTUNG ZUM SENDEN UND EMPFANGEN VON BENUTZERDATEN
PROCÉDÉ ET DISPOSITIF DE TERMINAL POUR ENVOYER ET RECEVOIR DES DONNÉES D'UTILISATEUR

(43) Date of publication of application: 19.10.2016
(73) Proprietor: HUAWEI TECHNOLOGIES CO., LTD., Shenzhen Guangdong 518129 (CN)
(72) Inventor: LI, Zijun, Shenzhen Guangdong 518129 (CN); RONG, Guoqiang, Shenzhen Guangdong 518129 (CN)
(74) Representative: Maiwald Patent- und Rechtsanwaltsgesellschaft mbH
(86) International application number: PCT/CN2014/070414
(87) International publication number: WO 2015/103762

(56) References cited:
- EP-A1- 2 076 071
- EP-A1- 2 461 613
- CN-A- 101 222 711
- CN-A- 101 222 712
- CN-A- 101 222 771
- CN-A- 101 933 346
- US-A1- 2007 105 531

## Description

### TECHNICAL FIELD

The present invention relates to the field of communications technologies, and in particular, to methods for sending and receiving user data and terminal devices.

### BACKGROUND

In a subscriber identity module (SIM) card of a terminal such as a mobile phone or a third-generation mobile communication (third generation, 3G) WAN card, SIM card data that is necessary for connecting the terminal to a network of a telecommunications operator is recorded, including an international mobile subscriber identity (International Mobile Subscriber Identity, IMSI), an authentication key, and a related parameter of the network of the operator. The terminal can implement a communication function only after a SIM card is installed therein.

The SIM card further has some storage space, and the terminal can save some user data in the SIM card, for example, the terminal saves contact information or a short message service message in the SIM card. When the SIM card is inserted into different terminals, the user data can be transferred between different mobile phones. When a user needs to use the user data in the SIM card, the user data can be read from the SIM card by using a relevant program of the terminal.

With the development of technologies, people further propose a solution of a virtual SIM card, that is, the communication function is implemented by downloading SIM card data and saving the SIM card data in a secure storage area of a terminal, and reading data in the area by the terminal using a corresponding management module, without inserting a SIM card in a physical form into the terminal. In this way, use and management of the SIM card data are easier; in addition, because there is no limitation by a SIM card slot, one terminal can be provided with multiple virtual SIM cards.

In the prior art of virtual SIM cards, when a virtual SIM card is transferred between terminals, that is, SIM card data is deleted from a terminal and installed in another terminal, because the virtual SIM card cannot carry user data such as contact information by using its own storage space like a physical SIM card, the user data cannot be transferred together with the SIM card data to the new terminal, and the user can only transfer the user data separately, which is not convenient enough.

EP 2 076 071 A1 describes systems and methods for providing a capability to backup cellular telephone provisioning information and personal data from a mobile handset on a server.

EP 2 461 613 A1 describes systems and methods for the management of secure elements, like UICCs embedding SIM applications, these secure elements being installed, fixedly or not, in terminals, like for example mobile phones.

### SUMMARY

Embodiments of the present invention provide methods for sending and receiving user data and terminal devices, to resolve a problem that user data cannot be transferred together with SIM card data as defined by the independent claims. Further embodiments are provided by the dependent claims.

According to a first aspect, an embodiment of the present invention provides a method for sending user data, including:
receiving, by a first terminal, an instruction for transferring a virtual subscriber identity module ,SIM, card of the first terminal to a second terminal;
acquiring, by the first terminal according to the instruction, user data associated with the virtual SIM card; and
sending, by the first terminal, the user data to a server, or sending, by the first terminal, the user data to the second terminal.

With reference to the first aspect, in a first possible implementation manner, the acquiring, by the first terminal according to the instruction, user data associated with the virtual SIM card includes:
acquiring, by the first terminal, SIM card data of the virtual SIM card according to the instruction;
acquiring, by the first terminal, a local storage address of the user data, where the local storage address of the user data is included in the SIM card data; and
acquiring, by the first terminal, the user data according to the local storage address. With reference to the first possible implementation manner of the first aspect, in a second possible implementation manner, the sending, by the first terminal, the user data to a server includes:
acquiring, by the first terminal, a network storage address of the user data, where the network storage address of the user data is included in the SIM card data; and
uploading, by the first terminal, the user data to a server that corresponds to the network storage address.

With reference to the first aspect, in a third possible implementation manner, the method further includes:
sending, by the first terminal, an owner identifier of the user data to the server when sending the user data to the server, so that the server sends the user data to the second terminal when receiving a request for downloading the user data, where the request is sent by the second terminal and carries the owner identifier.

With reference to the first aspect, in a fourth possible implementation manner, the acquiring, by the first terminal according to the instruction, user data associated with the virtual SIM card includes:
acquiring, by the first terminal, SIM card data of the virtual SIM card according to the instruction, where the SIM card data includes the user data; and
the sending, by the first terminal, the user data to a server, or sending, by the first terminal, the user data to the second terminal includes:
   sending, by the first terminal, the SIM card data to the server, or sending, by the first terminal, the SIM card data to the second terminal.

With reference to the first aspect or any one of the first to fourth possible implementation manners of the first aspect, in a fifth possible implementation manner, the user data includes one or any combination of the following types of data:
contact information, short message service message, text document, image data, video data and audio data.

According to a second aspect, an embodiment of the present invention provides a method for receiving user data, including:
receiving, by a second terminal, an instruction for transferring a virtual subscriber identity module ,SIM ,card of a first terminal to the second terminal; and
receiving, by the second terminal according to the instruction, user data that is sent by a server and associated with the virtual SIM card; or receiving, by the second terminal according to the instruction, user data that is sent by the first terminal and associated with the virtual SIM card.

With reference to the second aspect, in a first possible implementation manner, the receiving, by the second terminal according to the instruction, user data that is sent by a server and associated with the virtual SIM card includes:
receiving, by the second terminal, SIM card data of the virtual SIM card according to the instruction, where the SIM card data of the virtual SIM card is sent by the first terminal;
acquiring, by the second terminal, a network storage address of the user data, where the network storage address of the user data is included in the SIM card data;
requesting, by the second terminal, a server that corresponds to the network storage address to send the user data; and
receiving, by the second terminal, the user data sent by the server.

With reference to the first possible implementation manner of the second aspect, in a second possible implementation manner, after the receiving, by the second terminal, the user data sent by the server, the method further includes:
acquiring, by the second terminal, a local storage address of the user data; and
recording, by the second terminal, the local storage address in the SIM card data.

According to a third aspect, an embodiment of the present invention provides a terminal device, where the terminal device includes:
an instruction receiving unit, configured to receive an instruction for transferring a virtual SIM card to another terminal;
a data acquiring unit, configured to acquire, according to the instruction, user data associated with the virtual SIM card; anda data output unit, configured to send the user data to a server, or send the user data to the another terminal.

With reference to the third aspect, in a first possible implementation manner, the data acquiring unit is specifically configured to:
acquire SIM card data of the virtual SIM card according to the instruction;
acquire a local storage address of the user data, where the local storage address of the user data is included in the SIM card data; and
acquire the user data according to the local storage address.

With reference to the first possible implementation manner of the third aspect, in a second possible implementation manner, the data acquiring unit is specifically configured to acquire a network storage address of the user data, where the network storage address of the user data is included in the SIM card data; and
the data output unit is specifically configured to upload the user data to a server that corresponds to the network storage address.

With reference to the third aspect, in a third possible implementation manner, the data output unit is further configured to:
send an owner identifier of the user data to the server, so that the server sends the user data to the another terminal when receiving a request for downloading the user data, where the request is sent by the another terminal and carries the owner identifier.

With reference to the third aspect, in a fourth possible implementation manner, the data acquiring unit is specifically configured to:
acquire SIM card data of the virtual SIM card according to the instruction, where the SIM card data includes the user data; and
the data output unit is specifically configured to:
send the SIM card data to the server, or send the SIM card data to the another terminal.

According to a fourth aspect, an embodiment of the present invention provides a terminal device, where the terminal device includes:
an instruction receiving unit, configured to receive an instruction for transferring a virtual subscriber identity module ,SIM, card of another terminal to the terminal; and
a first data receiving unit, configured to receive, according to the instruction, user data that is sent by a server and associated with the virtual SIM card, and/or a second data receiving unit, configured to receive, according to the instruction, user data that is sent by the another terminal and associated with the virtual SIM card.

With reference to the fourth aspect, in a first possible implementation manner, the first data receiving unit is specifically configured to:
receive SIM card data of the virtual SIM card according to the instruction, where the SIM card data of the virtual SIM card is sent by the another terminal;
acquire a network storage address of the user data, where the network storage address of the user data is included in the SIM card data;
request a server that corresponds to the network storage address to send the user data; and
receive the user data sent by the server.

With reference to the first possible implementation manner of the fourth aspect, in a second possible implementation manner, the terminal device further includes:
a local recording unit, configured to: after the first data receiving unit receives the user data sent by the server, acquire a local storage address of the user data; and
record the local storage address in the SIM card data.

According to a fifth aspect, an embodiment of the present invention provides a terminal device, where the terminal device includes:
a memory, configured to store user data associated with a virtual SIM card;
a processor, configured to receive an instruction for transferring the virtual SIM card to another terminal, and acquire the user data according to the instruction; and
a transmitter, configured to send the user data to a server, or send the user data to the another terminal.

With reference to the fifth aspect, in a first possible implementation manner, the memory is further configured to store SIM card data of the virtual SIM card; and
the processor being configured to acquire the user data according to the instruction specifically includes:
acquiring the SIM card data according to the instruction;
acquiring a local storage address of the user data, where the local storage address of the user data is included in the SIM card data; and
acquiring the user data according to the local storage address.

With reference to the first possible implementation manner of the fifth aspect, in a second possible implementation manner,
the processor is further configured to: acquire a network storage address of the user data, where the network storage address of the user data is included in the SIM card data; and
the transmitter is specifically configured to: upload the user data to a server that corresponds to the network storage address.

With reference to the fifth aspect, in a third possible implementation manner, the transmitter is further configured to:
send an owner identifier of the user data to the server, so that the server sends the user data to the another terminal when receiving a request for downloading the user data, where the request is sent by the another terminal and carries the owner identifier.

With reference to the fifth aspect, in a fourth possible implementation manner, the memory is further configured to store SIM card data of the virtual SIM card; and
the processor being configured to acquire the user data according to the instruction specifically includes:
acquiring the SIM card data according to the instruction, where the SIM card data includes the user data; and
the transmitter is specifically configured to:
send the SIM card data to the server, or send the SIM card data to the another terminal.

According to a sixth aspect, an embodiment of the present invention provides a terminal device, where the terminal device includes:
a processor, configured to receive an instruction for transferring a virtual subscriber identity module, SIM, card of another terminal to the terminal;
a transceiver, configured to receive, according to the instruction, user data that is sent by a server and associated with the virtual SIM card, or receive, according to the instruction, user data that is sent by the another terminal and associated with the virtual SIM card; and
a memory, configured to store the user data.

With reference to the sixth aspect, in a first possible implementation manner, the transceiver being configured to receive, according to the instruction, user data that is sent by a server and associated with the virtual SIM card specifically includes:
receiving SIM card data of the virtual SIM card according to the instruction, where the SIM card data of the virtual SIM card is sent by the another terminal;
requesting a server that corresponds to a network storage address of the user data to send the user data, where the network storage address of the user data is included in the SIM card data; and
receiving the user data sent by the server.

With reference to the first possible implementation manner of the sixth aspect, in a second possible implementation manner, the memory is further configured to:
after the transceiver receives the SIM card data of the virtual SIM card, store the SIM card data, where the SIM card data of the virtual SIM card is sent by the another terminal; and
the processor is further configured to:
   after the transceiver receives the user data sent by the server, acquire a local storage address of the user data; and
   record the local storage address in the SIM card data stored in the memory.

In the embodiments of the present invention, a first terminal receives an instruction for transferring a virtual subscriber identity module ,SIM, card of the first terminal to a second terminal, the first terminal acquires, according to the instruction, user data associated with the virtual SIM card, and the first terminal sends the user data to a server, or the first terminal sends the user data to the second terminal, so that when the first terminal transfers the virtual SIM card to the second terminal, the second terminal acquires the user data associated with the virtual SIM card, thereby avoiding separately transferring the user data by a user, reducing processing steps of the user, and providing more convenience.

### BRIEF DESCRIPTION OF DRAWINGS

FIG. 1 is a schematic flowchart of a method for sending user data according to an embodiment of the present invention;
FIG. 2 is a schematic diagram of information about user data storage addresses according to an embodiment of the present invention;
FIG. 3 is a schematic flowchart of a method for receiving user data according to an embodiment of the present invention;
FIG. 4 and FIG. 5 are schematic flowcharts according to specific Embodiment 1 of the present invention;
FIG. 6 is a schematic flowchart according to specific Embodiment 2 of the present invention; and
FIG. 7 to FIG. 10 are schematic structural diagrams of terminal devices according to embodiments of the present invention.

### DESCRIPTION OF EMBODIMENTS

Embodiments of the present invention provide methods for sending and receiving user data and terminal devices, which are used to achieve that when a virtual SIM card is transferred between terminals, a terminal receiving the virtual SIM card can acquire user data associated with the virtual SIM card, thereby reducing processing steps of a user, and providing more convenience.

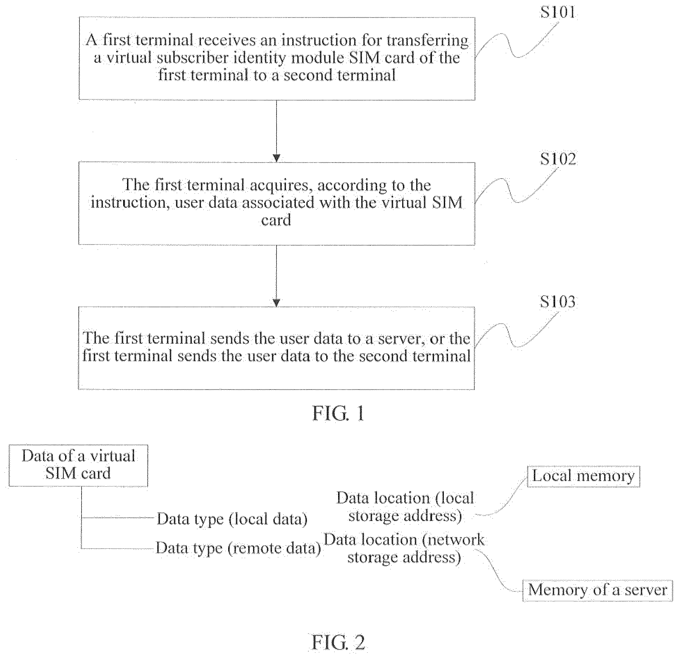

Referring to FIG. 1, a method for sending user data provided in an embodiment of the present invention includes:
S101: A first terminal receives an instruction for transferring a virtual subscriber identity module ,SIM, card of the first terminal to a second terminal.
S102: The first terminal acquires, according to the instruction, user data associated with the virtual SIM card.
S103: The first terminal sends the user data to a server, or the first terminal sends the user data to the second terminal.

In this embodiment of the present invention, a user associates, in the following two manners in advance, the virtual SIM card with the user data that needs to be transferred together with the virtual SIM card: One manner is reserving some storage space in SIM card data of the virtual SIM card, so that the user directly writes, deletes, modifies and queries for user data in the reserved storage space by using a management module. The other manner is newly adding address information of local storage space to SIM card data, where all user data of the user that needs to be transferred together with the virtual SIM card is stored in this local storage space, and the user can perform operations such as user data writing, deletion, modification and query in this local storage space. The management module is a module between an application program and the virtual SIM card, providing an application programming interface (Application Program Interface, API) for invocation by the application program. Any operation on the SIM card data can only be performed by using the management module. Optionally, the acquiring, by the first terminal according to the instruction, user data associated with the virtual SIM card includes: acquiring, by the first terminal, SIM card data of the virtual SIM card according to the instruction, where the SIM card data includes the user data; and the sending, by the first terminal, the user data to a server, or sending, by the first terminal, the user data to the second terminal includes: sending, by the first terminal, the SIM card data to the server, or sending, by the first terminal, the SIM card data to the second terminal.

Optionally, the acquiring, by the first terminal according to the instruction, user data associated with the virtual SIM card includes: acquiring, by the first terminal, SIM card data of the virtual SIM card according to the instruction; acquiring, by the first terminal, a local storage address of the user data, where the local storage address of the user data is included in the SIM card data; and acquiring, by the first terminal, the user data according to the local storage address.

Further, after the first terminal acquires the user data according to the local storage address, the sending, by the first terminal, the user data to a server includes: acquiring, by the first terminal, a network storage address of the user data, where the network storage address of the user data is included in the SIM card data; and uploading, by the first terminal, the user data to a server that corresponds to the network storage address, so that the server forwards the user data to the second terminal. The SIM card data not only includes the local storage address of the user data so that the user data is saved by using larger local storage space, but also includes the network storage address of the user data so that network storage space is used for transition when the data is transferred to the second terminal. As shown in FIG. 2, two sets of address information are recorded in the SIM card data, and each set of address information includes two subitems: a data type and a data location. The data type includes local data and remote data, where the local data indicates that data is saved in local persistent storage space of a terminal, such as a secure digital (Secure Digital, SD) card or a hard disk; and the remote data indicates that data is saved in a server on a network side. Correspondingly, the data location includes a local storage address and a network storage address. After being uploaded to the server that corresponds to the network storage address, the user data of the first terminal becomes remote data; and the second terminal sends a request to the server according to the network storage address in the received SIM card data, downloads the remote data from the server, and overwrites the local storage address that is originally recorded in the data of the virtual SIM card with a local storage address of the remote data.

Specifically, by using an XML formal as an example, a manner of recording storage addresses of Local Contact (local data) and RemoteContact (remote data) in the SIM card data is as follows:

```
 <?xml version="1.0" encoding="UTF-8"?>
 <Data>
 <Local Contact>./device/rockchip/rk30sdk/contract.dat</localContact> //a file path
 of local data
 <RemoteContact>http://www.a.contract/userid</RemoteContact> //a URI of
 remote data
 <Data>
```

Preferably, because the server may provide services of user data transfer simultaneously for multiple terminals, in order to enable the server to accurately forward the user data of the first terminal to the second terminal, the first terminal sends an owner identifier of the user data to the server when sending the user data to the server, so that when receiving a request for downloading the user data, where the request is sent by the second terminal and carries the owner identifier, the server finds, according to the owner identifier carried in the request, the user data uploaded by the first terminal and sends the user data to the second terminal.

The owner identifier may be an identifier of the virtual SIM card, or a mobile number included in the SIM card data, or other specified information.

Specifically, the sending, by the first terminal, the SIM card data to the second terminal includes: sending, by the first terminal, the SIM card data to the second terminal by using a detachable storage medium or performing near field communication. For example, an SD card, Bluetooth, near field communication (Near Field Communication, NFC), or other manners may be used for transmission. The sending, by the first terminal the user data to the second terminal may also be implemented in one of these manners in addition to using a server. Specifically, the user data includes one or any combination of the following types of data: contact information, short message service message, text document, image data, video data and audio data. User data associated with a virtual SIM card is saved by using storage space of a terminal, where the storage space has a relatively large storage capacity. Compared with a physical SIM card that can only carry a small quantity of contact information and short message service messages, this embodiment of the present invention can achieve that the virtual SIM card carries a larger quantity of data in richer formats.

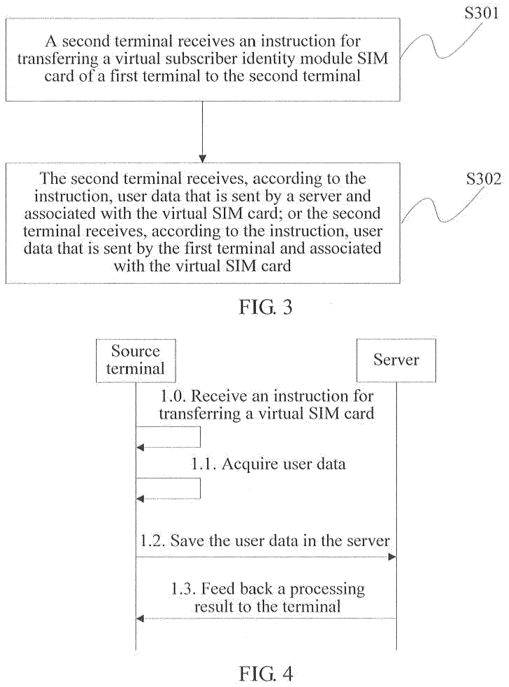

Referring to FIG. 3, a method for receiving user data provided in an embodiment of the present invention includes:
S301: A second terminal receives an instruction for transferring a virtual subscriber identity module ,SIM, card of a first terminal to the second terminal.
S302: The second terminal receives, according to the instruction, user data that is sent by a server and associated with the virtual SIM card; or the second terminal receives, according to the instruction, user data that is sent by the first terminal and associated with the virtual SIM card.

Specifically, in step S302, the receiving, by the second terminal according to the instruction, user data that is sent by a server and associated with the virtual SIM card includes: receiving, by the second terminal, SIM card data of the virtual SIM card according to the instruction, where the SIM card data of the virtual SIM card is sent by the first terminal; acquiring, by the second terminal, a network storage address of the user data, where the network storage address of the user data is included in the SIM card data; requesting, by the second terminal, a server that corresponds to the network storage address to send the user data; and receiving, by the second terminal, the user data sent by the server.

Further, after the receiving, by the second terminal, the user data sent by the server, the method further includes: acquiring, by the second terminal, a local storage address of the user data; and recording, by the second terminal, the local storage address in the SIM card data. The following are specific embodiments of the present invention.

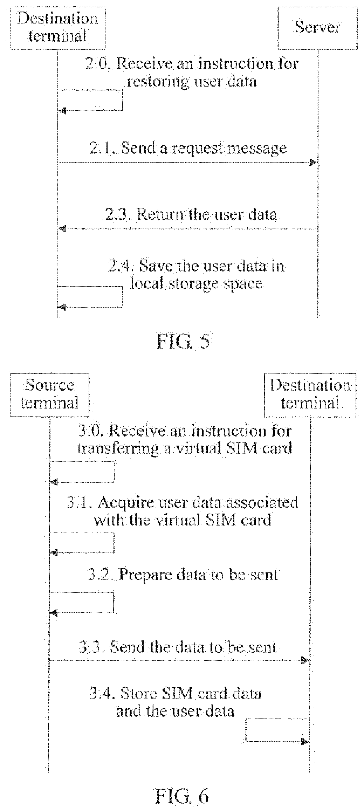

Specific Embodiment 1: User data is transferred between terminals by using a server. As shown in FIG. 4, on a source terminal side from which a virtual SIM card is transferred, an uploading process of user data includes;
1.0. A terminal receives an instruction for transferring a virtual SIM card.
   In actual application, transferring a virtual SIM card from a terminal to another terminal cannot be implemented by simply copying data of the virtual SIM card, but needs to be implemented by using a management module, where the management module acquires a local storage address and a network storage address from the SIM card data.
1.1. The terminal acquires user data.
   User data associated with the virtual SIM card is acquired according to the local storage address.
1.2. The terminal saves the user data in a server.
   The management module sends a request to the server according to the network storage address, where the request carries an owner identifier of the user data associated with the virtual SIM card, and then sends the user data that corresponds to the local storage address to the server. Before the request message is sent, the server possibly needs to authenticate the management module, to determine whether the management module is legal as a requester.
1.3. The server processes the user data and feeds back a processing result to the terminal.
   The server saves the received user data in a memory, and records a correspondence between the user data and the owner identifier of the user data, for convenience of use in a future query. After processing is completed, the server returns a processing result to the terminal.
   As shown in FIG. 5, on a destination terminal side that receives the virtual SIM card, a downloading process of the user data includes:
2.0. A terminal receives an instruction for restoring the user data.
   The data of the virtual SIM card is transferred from the source terminal to the destination terminal by multiple means, for example, SD card copying, Bluetooth transmission, NFC transmission, network backup/restoration, and the like. After completing work of activating the virtual SIM card, a management module receives an instruction for restoring the user data and starts to restore the user data.
2.1. Send a request message to the server.
   The management module sends a request to the server for acquiring the user data, where the request carries an owner identifier of the user data. Before the request, the management module may need to be authenticated by the server, to determine whether the management module is legal as a requester.
2.2. The server returns the user data.
   The server finds corresponding user data according to the received owner identifier of the user data, and returns the user data.
2.3. The terminal saves the user data in local storage space.
   After receiving the user data returned by the server, the management module saves the user data in a local memory. A saving location is determined according to an actual status of the local memory (a space size, including an SD card or not, and the like), and the local storage address in the data of the virtual SIM card is updated after the saving is completed successfully.
   Specific Embodiment 2: User data is directly transmitted between terminals. As shown in FIG. 6, a process includes:
3.0. A management module of a source terminal receives an instruction for transferring a virtual SIM card.
3.1. The management module of the source terminal acquires user data associated with the virtual SIM card.
   The management module of the source terminal acquires a local storage address of the user data from SIM card data, and reads the user data from the address.
3.2. The management module of the source terminal prepares data to be sent.
   Content of the user data and the SIM card data arc put into the data to be transmitted, or formed into a file that can be persistently stored, or temporarily stored in memory.
3.3. The source terminal sends the data to be sent.
   A secure connection is established between the source terminal and a destination terminal. A wireless or wired communication mode may be used to establish a data transmission channel, and after mutual authentication between the source terminal and the destination terminal succeeds, the source terminal sends the data to be transmitted, that is, the SIM card data and the user data, to the destination mobile terminal.
3.4. The destination terminal stores SIM card data and the user data.

A management module of the destination terminal parses received information, saves the SIM card data at a corresponding location and saves the user data in a local memory, and updates the local storage address recorded in the data of the virtual SIM card.

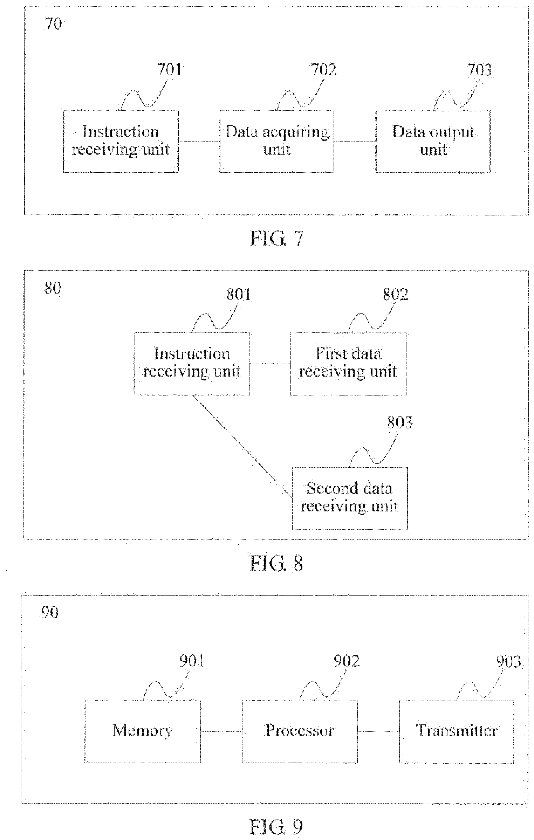

Referring to FIG. 7, a terminal device 70 provided in an embodiment of the present invention includes:
an instruction receiving unit 701, configured to receive an instruction for transferring a virtual SIM card to another terminal;
a data acquiring unit 702, configured to acquire, according to the instruction, user data associated with the virtual SIM card; and
a data output unit 703, configured to send the user data to a server, or send the user data to the another terminal.

Optionally, the data acquiring unit 702 is specifically configured to: acquire SIM card data of the virtual SIM card according to the instruction, where the SIM card data includes the user data; and the data output unit 703 is specifically configured to: send the SIM card data to the server, or send the SIM card data to the another terminal.

Optionally, the data acquiring unit 702 is specifically configured to: acquire SIM card data of the virtual SIM card according to the instruction; acquire a local storage address of the user data, where the local storage address of the user data is included in the SIM card data; and acquire the user data according to the local storage address.

Further, the data acquiring unit 702 is specifically configured to: acquire a network storage address of the user data, where the network storage address of the user data is included in the SIM card data; and the data output unit 703 is specifically configured to: upload the user data to a server that corresponds to the network storage address.

Further, the data output unit 703 is further configured to: send an owner identifier of the user data to the server, so that the server sends the user data to the another terminal when receiving a request for downloading the user data, where the request is sent by the another terminal and carries the owner identifier.

Specifically, the user data includes one or any combination of the following types of data: contact information, short message service message, text document, image data, video data and audio data.

It should be noted that, the terminal device in this embodiment is used to implement the foregoing steps S101 to S103, and the foregoing explanations and limitations for the method arc also applicable to the terminal device in this embodiment.

Referring to FIG. 8, a terminal device 80 provided in an embodiment of the present invention includes:
an instruction receiving unit 801, configured to receive an instruction for transferring a virtual subscriber identity module ,SIM, card of another terminal to the terminal; and
a first data receiving unit 802, configured to receive, according to the instruction, user data that is sent by a server and associated with the virtual SIM card, and/or a second data receiving unit 803, configured to receive, according to the instruction, user data that is sent by the another terminal and associated with the virtual SIM card,

The first data receiving unit 802 is specifically configured to:
receive SIM card data of the virtual SIM card according to the instruction, where the SIM card data of the virtual SIM card is sent by the another terminal;
acquire a network storage address of the user data, where the network storage address of the user data is included in the SIM card data;
request a server that corresponds to the network storage address to send the user data; and
receive the user data sent by the server.

Further, the terminal device 80 further includes:
a local recording unit, configured to: after the first data receiving unit receives the user data sent by the server, acquire a local storage address of the user data; and
record the local storage address in the SIM card data.

Referring to FIG. 9, a terminal device 90 provided in an embodiment of the present invention includes:
a memory 901, configured to store user data associated with a virtual SIM card;
a processor 902, configured to receive an instruction for transferring the virtual SIM card to another terminal, and acquire the user data according to the instruction; and
a transmitter 903, configured to send the user data to a server, or send the user data to the another terminal.

Optionally, the memory 901 is further configured to store SIM card data of the virtual SIM card; the processor 902 being configured to acquire the user data according to the instruction specifically includes: acquiring the SIM card data according to the instruction, where the SIM card data includes the user data; and the transmitter 903 is specifically configured to: send the SIM card data to the server, or send the SIM card data to the another terminal.

Optionally, the memory 901 is further configured to store SIM card data of the virtual SIM card; and the processor 902 being configured to acquire the user data according to the instruction specifically includes: acquiring the SIM card data according to the instruction; acquiring a local storage address of the user data, where the local storage address of the user data is included in the SIM card data; and acquiring the user data according to the local storage address.

Further, the processor 902 is further configured to: acquire a network storage address of the user data, where the network storage address of the user data is included in the SIM card data; and the transmitter 903 is specifically configured to: upload the user data to a server that corresponds to the network storage address.

Further, the transmitter 903 is further configured to: send an owner identifier of the user data to the server, so that the server sends the user data to the another terminal when receiving a request for downloading the user data, where the request is sent by the another terminal and carries the owner identifier.

Specifically, the user data includes one or any combination of the following types of data: contact information, short message service message, text document, image data, video data and audio data.

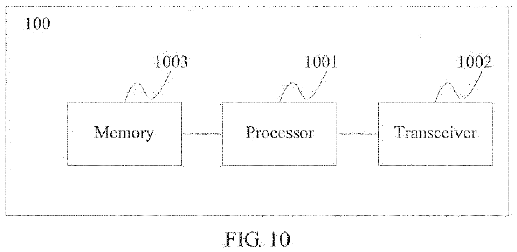

Referring to FIG. 10, a terminal device 100 provided in an embodiment of the present invention includes:
a processor 1001, configured to receive an instruction for transferring a virtual subscriber identity module, SIM, card of another terminal to the terminal;
a transceiver 1002, configured to receive, according to the instruction, user data that is sent by a server and associated with the virtual SIM card, or receive, according to the instruction, user data that is sent by the another terminal and associated with the virtual SIM card; and
a memory 1003, configured to store the user data.

The transceiver 1002 being configured to receive, according to the instruction, user data that is sent by a server and associated with the virtual SIM card specifically includes: receiving SIM card data of the virtual SIM card according to the instruction, where the SIM card data of the virtual SIM card is sent by the another terminal; requesting a server that corresponds to a network storage address of the user data to send the user data, where the network storage address of the user data is included in the SIM card data; and receiving the user data sent by the server.

The memory 1003 is further configured to: after the transceiver receives the SIM card data of the virtual SIM card, store the SIM card data, where the SIM card data of the virtual SIM card is sent by the another terminal; and the processor 1001 is further configured to: after the transceiver receives the user data sent by the server, acquire a local storage address of the user data, and record the local storage address in the SIM card data stored in the memory.

In conclusion, the embodiments of the present invention provide methods for sending and receiving user data and terminal devices, which achieve that when a virtual SIM card is transferred between terminals, user data associated with the virtual SIM card is transferred, thereby avoiding separately transferring the user data by a user, reducing processing steps of the user, and providing more convenience.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a magnetic disk storage, an optical storage, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention provided that they fall within the scope of protection defined by the following claims.

## Claims

1. A method for sending user data, comprising:
receiving (S101), by a first terminal, an instruction for transferring a virtual subscriber identity module, SIM, card of the first terminal to a second terminal;
acquiring (S102), by the first terminal according to the instruction, user data associated with the virtual SIM card; and
sending (S103), by the first terminal, the user data to a server,
**characterized in that** the acquiring, by the first terminal according to the instruction, user data associated with the virtual SIM card comprises:
acquiring, by the first terminal, SIM card data of the virtual SIM card according to the instruction by reading, by the first terminal, said SIM card data in a secure storage space of said first terminal;
acquiring, by the first terminal, a local storage address of the user data, wherein the local storage address of the user data is comprised in the SIM card data; wherein said local storage address of the user data is an address of a storage space in which said user data is stored, said storage space being storage space of the first terminal; and
acquiring, by the first terminal, the user data according to the local storage address by reading, by the first terminal, said user data from said local storage address;
wherein the sending, by the first terminal, the user data to a server comprises:
acquiring, by the first terminal, a network storage address of the user data, wherein the network storage address of the user data is comprised in the SIM card data; and uploading, by the first terminal, the user data to a server that corresponds to the network storage address;
wherein the method further comprises sending, by the first terminal, the SIM card data to the second terminal.

2. The method according to claim 1, wherein the sending, by the first terminal, the user data to a server comprises:
sending, by the first terminal, an owner identifier of the user data to the server when sending the user data to the server.

3. The method according to any one of claims 1 to 2, wherein the user data comprises one or any combination of the following types of data:
contact information, short message service message, text document, image data, video data and audio data.

4. A method for receiving user data, comprising:
receiving (S301), by a second terminal, an instruction for transferring a virtual subscriber identity module ,SIM, card of a first terminal to the second terminal; and
receiving (S302), by the second terminal according to the instruction, user data that is sent by a server and associated with the virtual SIM card;
**characterized in that** the receiving, by the second terminal according to the instruction, user data that is sent by a server and associated with the virtual SIM card comprises:
receiving, by the second terminal, SIM card data of the virtual SIM card according to the instruction, wherein the SIM card data of the virtual SIM card is sent by the first terminal;
acquiring, by the second terminal, a network storage address of the user data, wherein the network storage address of the user data is comprised in the SIM card data; requesting, by the second terminal, a server that corresponds to the network storage address to send the user data; and
receiving, by the second terminal, the user data sent by the server;
after the receiving, by the second terminal, the user data sent by the server, further comprising:
acquiring, by the second terminal, a local storage address of the user data; wherein said local storage address is an address of a local storage space of the second terminal; and saving said user data in said local storage space; and
recording, by the second terminal, the local storage address in the SIM card data being received, by overwriting, by the second terminal, a local storage address comprised in the SIM card data with the local storage address acquired by the second terminal.

5. A terminal device (90), wherein the terminal device comprises:
a memory (901), comprising storage space configured to store user data associated with a virtual SIM card;
a processor (902), configured to receive an instruction for transferring the virtual SIM card to another terminal, and acquire the user data according to the instruction; and
a transmitter (903), configured to send the user data to a server,
**characterized in that** the memory comprises secure storage space configured to store SIM card data of the virtual SIM card; and
the processor being configured to acquire the user data according to the instruction specifically comprises means for:
acquiring the SIM card data according to the instruction by reading said SIM card data in said secure storage space of said memory;
acquiring a local storage address of the user data, wherein the local storage address of the user data is comprised in the SIM card data; wherein said local storage address of the user data is an address of the storage space in which said user data is stored; and
acquiring the user data according to the local storage address by reading said user data from said local storage address;
wherein the processor is further configured to acquire a network storage address of the user data, wherein the network storage address of the user data is comprised in the SIM card data; and the transmitter is specifically configured to upload the user data to a server that corresponds to the network storage address and to send the SIM card data to the another terminal.

6. The device according to claim 5,
wherein the transmitter is further configured to send an owner identifier of the user data to the server.

## Patentansprüche

1. Verfahren zum Senden von Benutzerdaten, umfassend:
Empfangen (S101), durch ein erstes Endgerät, einer Anweisung zum Übertragen einer virtuellen "Subscriber Identity Module", SIM,-Karte des ersten Endgeräts auf ein zweites Endgerät;
Beschaffen (S102), durch das erste Endgerät entsprechend der Anweisung, von mit der virtuellen SIM-Karte assoziierten Benutzerdaten; und
Senden (S103), durch das erste Endgerät, der Benutzerdaten an einen Server,
**dadurch gekennzeichnet, dass** das Beschaffen, durch das erste Endgerät entsprechend der Anweisung, von mit der virtuellen SIM-Karte assoziierten Benutzerdaten umfasst:
Beschaffen, durch das erste Endgerät, von SIM-Kartendaten der virtuellen SIM-Karte entsprechend der Anweisung durch Auslesen, durch das erste Endgerät, der SIM-Kartendaten in einem sicheren Speicherplatz des ersten Endgeräts;
Beschaffen, durch das erste Endgerät, einer lokalen Speicheradresse der Benutzerdaten, wobei die lokale Speicheradresse der Benutzerdaten in den SIM-Kartendaten enthalten ist; wobei die lokale Speicheradresse der Benutzerdaten eine Adresse eines Speicherplatzes ist, in dem die Benutzerdaten gespeichert sind, wobei der Speicherplatz Speicherplatz des ersten Endgeräts ist; und
Beschaffen, durch das erste Endgerät, der Benutzerdaten entsprechend der lokalen Speicheradresse durch Auslesen, durch das erste Endgerät, der Benutzerdaten aus der lokalen Speicheradresse;
wobei das Senden, durch das erste Endgerät, der Benutzerdaten an einen Server umfasst:
Beschaffen, durch das erste Endgerät, einer Netzwerkspeicheradresse der Benutzerdaten, wobei die Netzwerkspeicheradresse der Benutzerdaten in den SIM-Kartendaten enthalten ist; und Hochladen, durch das erste Endgerät, der Benutzerdaten auf einen Server, der der Netzwerkspeicheradresse entspricht;
wobei das Verfahren ferner Senden, durch das erste Endgerät, der SIM-Kartendaten an das zweite Endgerät umfasst.

2. Verfahren nach Anspruch 1, wobei das Senden, durch das erste Endgerät, der Benutzerdaten an einen Server umfasst:
Senden, durch das erste Endgerät, einer Eigentümerkennung der Benutzerdaten an den Server bei Senden der Benutzerdaten an den Server.

3. Verfahren nach einem der Ansprüche 1 bis 2, wobei die Benutzerdaten eines oder eine beliebige Kombination der folgenden Arten von Daten umfassen:
Kontaktinformationen, Kurznachrichtendienstnachricht, Textdokument, Bilddaten, Videodaten und Audiodaten.

4. Verfahren zum Empfangen von Benutzerdaten, umfassend:
Empfangen (S301), durch ein zweites Endgerät, einer Anweisung zum Übertragen einer virtuellen "Subscriber Identity Module", SIM,-Karte eines ersten Endgeräts auf das zweite Endgerät; und
Empfangen (S302), durch das zweite Endgerät entsprechend der Anweisung, von Benutzerdaten, die durch einen Server gesendet werden und mit der virtuellen SIM-Karte assoziiert sind;
**dadurch gekennzeichnet, dass** das Empfangen, durch das zweite Endgerät entsprechend der Anweisung, von Benutzerdaten, die durch einen Server gesendet werden und mit der virtuellen SIM-Karte assoziiert sind, umfasst:
Empfangen, durch das zweite Endgerät, von SIM-Kartendaten der virtuellen SIM-Karte entsprechend der Anweisung, wobei die SIM-Kartendaten der virtuellen SIM-Karte durch das erste Endgerät gesendet werden;
Beschaffen, durch das zweite Endgerät, einer Netzwerkspeicheradresse der Benutzerdaten, wobei die Netzwerkspeicheradresse der Benutzerdaten in den SIM-Kartendaten enthalten ist; Auffordern, durch das zweite Endgerät, eines Servers, der der Netzwerkspeicheradresse entspricht, die Benutzerdaten zu senden; und
Empfangen, durch das zweite Endgerät, der durch den Server gesendeten Benutzerdaten;
nach Empfangen, durch das zweite Endgerät, der durch den Server gesendeten Benutzerdaten, ferner umfassend:
Beschaffen, durch das zweite Endgerät, einer lokalen Speicheradresse der Benutzerdaten; wobei die lokale Speicheradresse eine Adresse eines lokalen Speicherplatzes des zweiten Endgeräts ist; und Speichern der Benutzerdaten in dem lokalen Speicherplatz; und
Aufzeichnen, durch das zweite Endgerät, der lokalen Speicheradresse in den empfangenen SIM-Kartendaten durch Überschreiben, durch das zweite Endgerät, einer in den SIM-Kartendaten enthaltenen lokalen Speicheradresse mit der durch das zweite Endgerät beschafften lokalen Speicheradresse.

5. Endgerätvorrichtung (90), wobei die Endgerätvorrichtung umfasst:
einen Speicher (901), umfassend Speicherplatz, der ausgestaltet ist, mit der virtuellen SIM-Karte assoziierte Benutzerdaten zu speichern;
einen Prozessor (902), der ausgestaltet ist, eine Anweisung zum Übertragen der virtuellen SIM-Karte zu einem anderen Endgerät zu empfangen und die Benutzerdaten entsprechend der Anweisung zu beschaffen; und
einen Sender (903), der ausgestaltet ist, die Benutzerdaten an einen Server zu senden,
**dadurch gekennzeichnet, dass** der Speicher sicheren Speicherplatz umfasst, der ausgestaltet ist, SIM-Kartendaten der virtuellen SIM-Karte zu speichern; und
wobei, dass der Prozessor ausgestaltet ist, die Benutzerdaten entsprechend der Anweisung zu beschaffen, insbesondere Mittel für Folgendes umfasst:
Beschaffen der SIM-Kartendaten entsprechend der Anweisung durch Auslesen der SIM-Kartendaten in dem sicheren Speicherplatz des Speichers;
Beschaffen einer lokalen Speicheradresse der Benutzerdaten, wobei die lokale Speicheradresse der Benutzerdaten in den SIM-Kartendaten enthalten ist; wobei die lokale Speicheradresse der Benutzerdaten eine Adresse des Speicherplatzes ist, in dem die Benutzerdaten gespeichert sind; und
Beschaffen der Benutzerdaten entsprechend der lokalen Speicheradresse durch Auslesen der Benutzerdaten aus der lokalen Speicheradresse;
wobei der Prozessor ferner ausgestaltet ist, eine Netzwerkspeicheradresse der Benutzerdaten zu beschaffen, wobei die Netzwerkspeicheradresse der Benutzerdaten in den SIM-Kartendaten enthalten ist; und wobei der Sender insbesondere ausgestaltet ist, die Benutzerdaten auf einen Server hochzuladen, der der Netzwerkspeicheradresse entspricht, und die SIM-Kartendaten an das andere Endgerät zu senden.

6. Vorrichtung nach Anspruch 5, wobei
der Sender ferner ausgestaltet ist, eine Eigentümerkennung der Benutzerdaten an den Server zu senden.

## Revendications

1. Procédé permettant d'envoyer des données utilisateur, consistant à :
recevoir (S101), par un premier terminal, une instruction pour transférer une carte de module d'identité d'abonné (SIM) virtuelle du premier terminal à un second terminal ;
acquérir (S102), par le premier terminal en fonction de l'instruction, des données utilisateur associées à la carte SIM virtuelle ; et
envoyer (S 103), par le premier terminal, les données utilisateur à un serveur,
**caractérisé en ce que** l'acquisition, par le premier terminal en fonction de l'instruction, de données utilisateur associées à la carte SIM virtuelle consiste à :
acquérir, par le premier terminal, des données de carte SIM de la carte SIM virtuelle en fonction de l'instruction en lisant, par le premier terminal, lesdites données de carte SIM dans un espace de stockage sécurisé dudit premier terminal ;
acquérir, par le premier terminal, une adresse de stockage local des données utilisateur, l'adresse de stockage local des données utilisateur étant contenue dans les données de carte SIM ; dans lequel ladite adresse de stockage local des données utilisateur est une adresse d'un espace de stockage dans lequel sont mémorisées lesdites données utilisateur, ledit espace de stockage étant un espace de stockage du premier terminal ; et
acquérir, par le premier terminal, les données utilisateur en fonction de l'adresse de stockage local en extrayant, par le premier terminal, lesdites données utilisateur de ladite adresse de stockage local ;
dans lequel l'envoi, par le premier terminal, des données utilisateur à un serveur consiste à :
acquérir, par le premier terminal, une adresse de stockage en réseau des données utilisateur, l'adresse de stockage en réseau des données utilisateur étant contenue dans les données de carte SIM ; et télécharger, par le premier terminal, les données utilisateur vers un serveur qui correspond à l'adresse de stockage en réseau ;
le procédé consistant en outre à envoyer, par le premier terminal, les données de carte SIM au second terminal.

2. Procédé selon la revendication 1, dans lequel l'envoi, par le premier terminal, des données utilisateur à un serveur consiste à :
envoyer, par le premier terminal, un identifiant de propriétaire des données utilisateur au serveur lors de l'envoi des données utilisateur au serveur.

3. Procédé selon l'une quelconque des revendications 1 et 2, dans lequel les données utilisateur comprennent un type ou une combinaison quelconque des types de données suivants :
des informations de contact, un message SMS, un document texte, des données d'image, des données vidéo et des données audio.

4. Procédé permettant de recevoir des données utilisateur, consistant à :
recevoir (S301), par un second terminal, une instruction pour transférer une carte de module d'identité d'abonné (SIM) virtuelle d'un premier terminal vers le second terminal ; et
recevoir (S302), par le second terminal en fonction de l'instruction, des données utilisateur qui sont envoyées par un serveur et associées à la carte SIM virtuelle ;
**caractérisé en ce que** la réception, par le second terminal en fonction de l'instruction, de données utilisateur qui sont envoyées par un serveur et associées à la carte SIM virtuelle consiste à :
recevoir, par le second terminal, des données de carte SIM de la carte SIM virtuelle en fonction de l'instruction, les données de carte SIM de la carte SIM virtuelle étant envoyées par le premier terminal ;
acquérir, par le second terminal, une adresse de stockage en réseau des données utilisateur, l'adresse de stockage en réseau des données utilisateur étant contenue dans les données de carte SIM ; demander, par le second terminal, un serveur qui correspond à l'adresse de stockage en réseau pour envoyer les données utilisateur ; et
recevoir, par le second terminal, les données utilisateur envoyées par le serveur ;
après la réception, par le second terminal, des données utilisateur envoyées par le serveur, consistant en outre à :
acquérir, par le second terminal, une adresse de stockage local des données utilisateur ; ladite adresse de stockage local étant une adresse d'un espace de stockage local du second terminal ; et sauvegarder lesdites données utilisateur dans ledit espace de stockage local ; et
enregistrer, par le second terminal, l'adresse de stockage local dans les données de carte SIM en cours de réception, en écrasant, par le second terminal, une adresse de stockage local contenue dans les données de carte SIM en cours avec l'adresse de stockage local acquise par le second terminal.

5. Dispositif terminal (90), le dispositif terminal comprenant :
une mémoire (901), comprenant un espace de stockage configuré pour mémoriser des données utilisateur associées à une carte SIM virtuelle ;
un processeur (902), configuré pour recevoir une instruction pour transférer la carte SIM virtuelle vers un autre terminal, et pour acquérir les données utilisateur en fonction de l'instruction ; et
un émetteur (903), configuré pour envoyer les données utilisateur à un serveur,
**caractérisé en ce que** la mémoire comprend un espace de stockage sécurisé configuré pour mémoriser des données de carte SIM de la carte SIM virtuelle ; et
le processeur configuré pour acquérir les données utilisateur en fonction de l'instruction comprend plus particulièrement des moyens pour :
acquérir les données de carte SIM en fonction de l'instruction en lisant lesdites données de carte SIM dans ledit espace de stockage sécurisé de ladite mémoire ;
acquérir une adresse de stockage local des données utilisateur, l'adresse de stockage local des données utilisateur étant contenue dans les données de carte SIM ; ladite adresse de stockage local des données utilisateur étant une adresse de l'espace de stockage dans lequel sont mémorisées lesdites données utilisateur ; et
acquérir les données utilisateur en fonction de l'adresse de stockage local en extrayant lesdites données utilisateur de ladite adresse de stockage local ;
dans lequel le processeur est en outre configuré pour acquérir une adresse de stockage en réseau des données utilisateur,
dans lequel l'adresse de stockage en réseau des données utilisateur est contenue dans les données de carte SIM ; et l'émetteur est plus particulièrement configuré pour télécharger les données utilisateur vers un serveur qui correspond à l'adresse de stockage en réseau et pour envoyer les données de carte SIM à l'autre terminal.

6. Dispositif selon la revendication 5, dans lequel
l'émetteur est en outre configuré pour envoyer un identifiant de propriétaire des données utilisateur au serveur.
